(19) Europäisches Patentamt
European Patent Office
Office européen des brevets

(11) Publication number: 0 163 464
A1

# (12) EUROPEAN PATENT APPLICATION

(21) Application number: 85303498.1

(22) Date of filing: 17.05.85

(51) Int. Cl.⁴: C 08 L 71/00
C 08 L 65/00, C 08 L 79/08

(30) Priority: 18.05.84 US 611670

(43) Date of publication of application:
04.12.85 Bulletin 85/49

(84) Designated Contracting States:
AT BE CH DE FR GB IT LI NL SE

(71) Applicant: RAYCHEM CORPORATION
300 Constitution Drive
Menlo Park California 94025(US)

(72) Inventor: Dubrow, Robert Stanley
334, Roble Avenue
Redwood City California 1355(US)

(72) Inventor: Froix, Michael Francis
1355 Miravall Avenue
Los Altos California(US)

(72) Inventor: Petersen, Marianne
2567 Hampton Avenue, Redwood City
California 94061(US)

(72) Inventor: Farrar, Nigel Richard
2211 Latham Street, No. 114
Mountain View California 94040(US)

(72) Inventor: Hathaway, Mary C.
15149 Brewster Avenue
San Jose California 95124(US)

(74) Representative: Jay, Anthony William et al,
Raychem Limited Intellectual Property Law Department
Faraday Road
Dorcan Swindon Wiltshire(GB)

## (54) Blends of poly (aryl ether) ketones.

(57) The invention relates to polymeric blends comprising a) a first component comprising a poly(aryl ether ketone) and b) a second component comprising a polyetherimide or the co-polymers thereof wherein the poly(aryl ether ketone) comprises at least 40 weight percent of the weight of a) plus b). These polymers are molecularly compatible and the blends show surprisingly increased tensile strength at high temperatures and increased elongation over that expected from a mechanical blend and said blends containing at least 40% of poly(aryl ether ketone) exhibit relatively constant physical properties over the entire range of concentrations.

EP 0 163 464 A1

Croydon Printing Company Ltd.

This invention relates to blends of polymers. More particularly the invention relates to blends of at least about 40% weight percent poly(aryl ether ketone) with a polyetherimide resin.

Poly(aryl ether ketones) are known in the art and are tough, rigid, high performance thermoplastics which have excellent mechanical and electrical properties. Articles formed from them maintain their properties over a wide temperature range and can be used continuously at high use temperature.

The polyetherimides are well known in the art and are described in for example U.S. Patent Nos. 3,847,867, 3,838,097, 4,107,147 and 4,293,670. They are amorphous polymers which can be processed at high temperature, are readily formed and have good temperature resistance.

It is well known that most polymers are generally incompatible with each other. Most blends of two or more polymers contain the separate polymers as individual component domains or phases. Blends of what are termed compatible polymers generally are mechanically compatible

only and exhibit properties which vary widely over the concentration range of the polymers. Such blends comprise a matrix polymer containing the other polymer as a dispersed or co-continuous phase. Such numerous dispersed phases can be microscopic in size sometimes giving the resulting blend the appearance of being only a single phase. There are, however, a few pairs of polymer pairs which are molecularly compatible, that is they form a molecularly dispersed mixture comprising a single amorphous phase when they are blended together. Not only do such blends not separate into their individual amorphous components, but they are also characterized by having a single glass transition temperature (Tg). Mechanically compatible blends, on the other hand, exhibit two or more Tg's characteristic of those of the individual components. By the Tg is meant the approximate temperature at which an amorphous polymer or the amorphous regions of a partially crystalline polymer changes from a hard and relatively brittle state to a more flexible or rubbery condition. Measurement of glass transition temperatures of polymer systems is described in, for example, Thermal Characterization Technique, Slade, et al., Harcel Dekker Inc., New York (1970).

In U.S. Patent No. 4,293,670 to Robeson et al., incorporated herein by reference, compositions are described comprising blends of poly (aryl ethers) and polyetherimides resins. The only specific blends reported in the patent are blends of a poly (aryl ether sulfone) and a polyetherimide. Such blends exhibit mechanical compatibility with each blend having more than one glass transition temperature. Blends of a polyetherimide and a poly (aryl ether ketone) are discussed only

in very general terms and no specific blend of a poly(aryl ether ketone) and a polyetherimide is reported. There is no mention that blends of these components are molecularly compatible and therefore different from the poly (aryl ether sulfone)/polyetherimide blends which are specifically described.

It has now been unexpectedly found that blends comprising a) a first component comprising a poly(aryl ether ketone) and b) a second component comprising a polyetherimide and the co-polymers thereof wherein the poly(aryl ether ketone) is at least about 40 weight percent of the weight of a) plus b) are molecularly compatible and show surprisingly increased tensile strength at high temperatures and increased elongation over that expected from a mechanical blend and relatively constant physical properties over the entire range of concentrations of the blend. In a preferred embodiment the poly(aryl ether ketone) comprises at least 50% of the weight of a) plus b).

The term poly(aryl ether ketone) refers to polymers having the repeat unit of the formula

-CO-Ar-CO-Ar'-

wherein Ar and Ar' are aromatic moieties at least one of which contains a diaryl ether linkage forming part of the polymer backbone and wherein both Ar and Ar' are covalently linked to the carbonyl groups through aromatic carbon atoms.

Preferably, Ar and Ar' are independently selected from substituted and unsubstituted phenylene and substituted and unsubstituted polynuclear aromatic moieties. The term polynuclear aromatic moieites is used to mean aromatic moieties containing at least two aromatic rings. The rings can be fused, joined by a direct bond or by a linking group. Such linking groups include for example, carbonyl, ether sulfone, sulfide, amide, imide, azo, alkylene, perfluoroalkylene and the like. As mentioned above, at least one of Ar and Ar' contains a diaryl ether linkage.

The phenylene and polynuclear aromatic moieties can contain substituents on the aromatic rings. These substituents should not inhibit or otherwise interfere with the polymerization reaction to any significant extent. Such substituents include, for example, phenyl, halogen, nitro, cyano, alkyl, 2-alkynyl and the like.

Poly(aryl ether ketones) having the following repeat units (the simplest repeat unit being designated for a given polymer) are preferred:

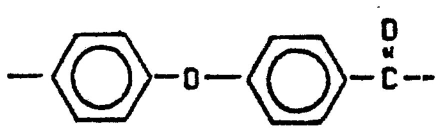

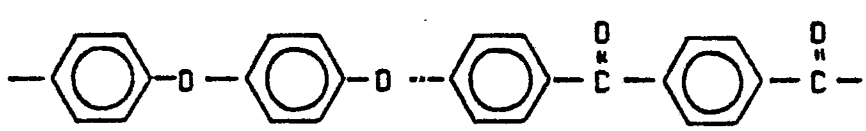

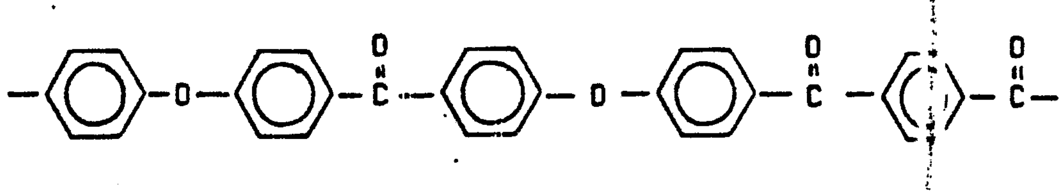

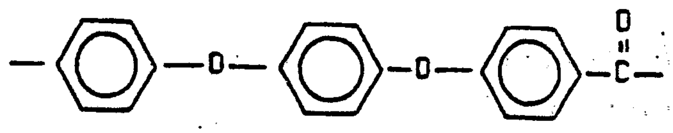

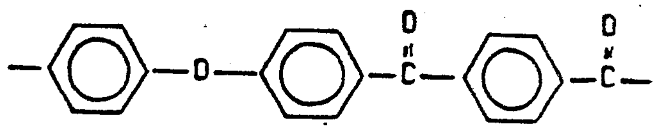

Poly(aryl ether ketones) can be prepared by known methods of synthesis. A preferred method comprises Friedel-Crafts polymerization of a monomer system comprising:

I) (i) phosgene or an aromatic diacid dihalide together with

(ii) a polynuclear aromatic comonomer comprising:

(a) H-Ar-O-Ar-H

(b) $H-(Ar-O)_n-Ar-H$
wherein n is 2 or 3

(c) $H-Ar-O-Ar-(CO-Ar-O-Ar)_m-H$
wherein m is 1, 2 or 3

or

II) an acid halide of the formula:
$H-Ar''-O-[(Ar''-CO)_p-(Ar''-O)_q-(Ar''-CO)_r]_k-Ar''-CO-Z$
wherein Z is halogen, k is 0, 1 or 2, p is 1 or 2, q is 0, 1 or 2 and r is 0, 1 or 2;

or

III) an acid halide of the formula:
$H-(Ar''-O)_n-Ar''-Y$
wherein n is 2 or 3 and Y is CO-Z or CO-Ar"-CO-Z where Z is halogen;

wherein each Ar" is independently selected from substituted or unsubstituted phenylene, and substituted and unsubstituted polynuclear aromatic moieties free of ketone carbonyl or ether oxygen groups, in the presence of a reaction medium comprising:

A) A Lewis acid in an amount of one equivalent per equivalent of carbonyl groups present, plus one equivalent per equivalent of Lewis base, plus an amount effective to act as a catalyst for the polymerization;

B) a Lewis base in an amount from 0 to about 4 equivalents per equivalent of acid halide groups present in the monomer system;

and

C) a non-protic diluent in an amount from 0 to about 93% by weight, based on the weight of the total reaction mixture.

The aromatic diacid dihalide employed is preferably a dichloride or dibromide. Illustrative diacid dihalides which can be used include, for example

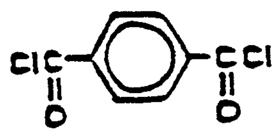
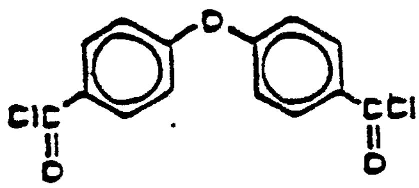
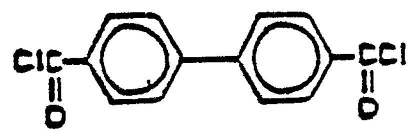
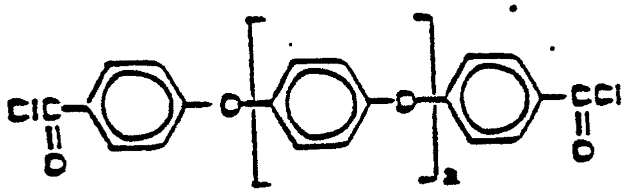
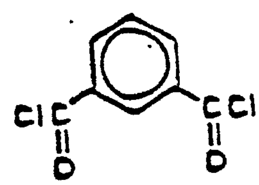
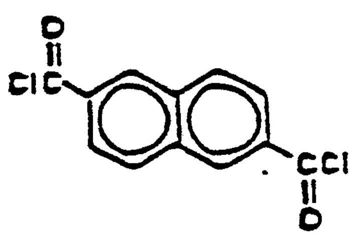
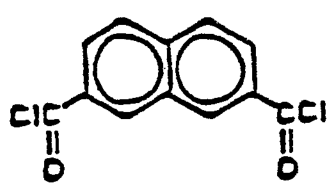
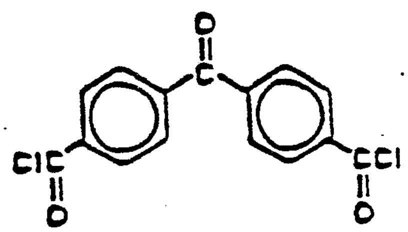

wherein a is 0-4.

Illustrated polynuclear aromatic comonomers which can be used with such diacid halides are:

(a) H-Ar"-O-Ar"-H, which includes, for example:

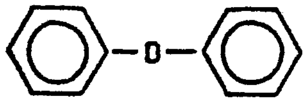

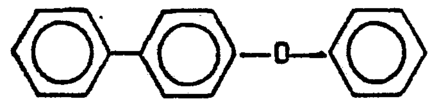

(b) $H-(Ar''-O)_n-Ar''-H$, which include, for example:

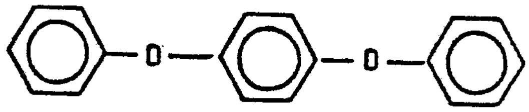

and

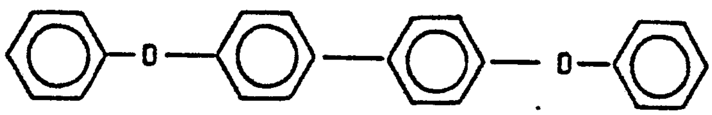

(c) $H-Ar''-O-Ar''-(CO-Ar''-O-Ar'')_m-H$, which includes, for example:

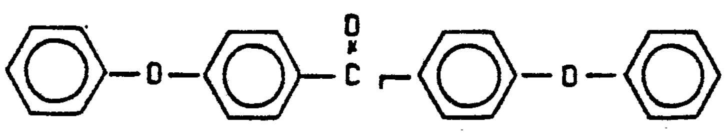

and

(d) $H-(Ar''-O)_n-Ar''-CO-Ar''-(O-Ar'')_m-H$ which includes, for example:

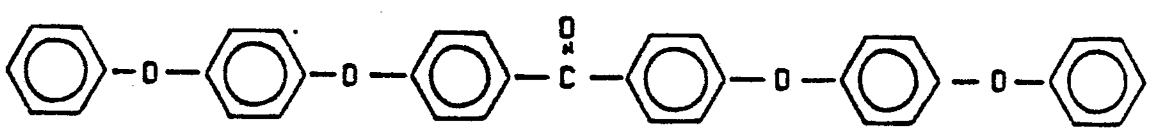

Monomer systems II and III comprise an acid halide. (The term acid halide is used herein to refer to a monoacid monohalide.) In monomer system II, the acid halide is of the formula:

$$H-Ar''-O-[(Ar''-CO)_p-(Ar''-O)_q-(Ar''-CO)_r]_k-Ar''-CO-Z$$

Such monomers include for example, where k = 0

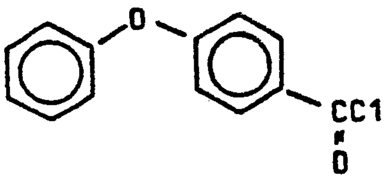

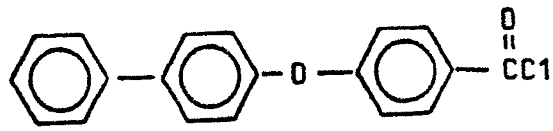

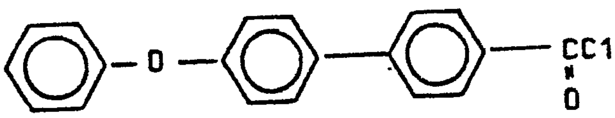

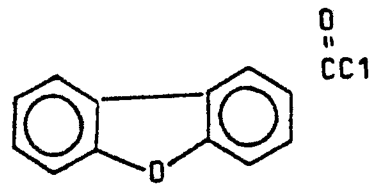

and where k = 1

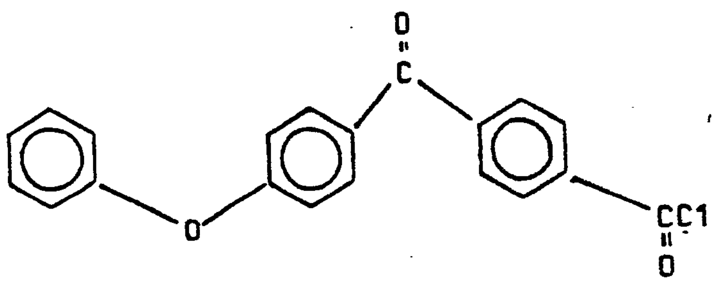

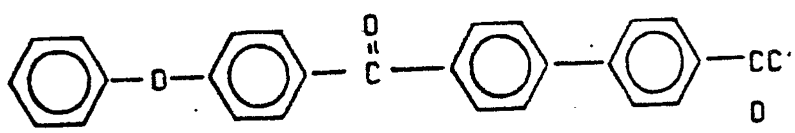

In monomer system III, the acid halide is of the formula

$$H-(Ar''-O)_n-Ar''-Y$$

Examples of such acid halides include

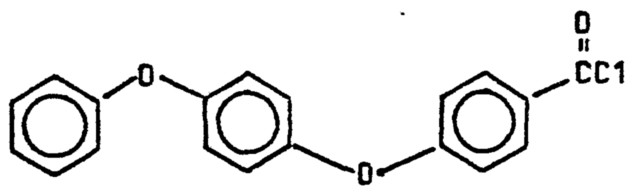

and

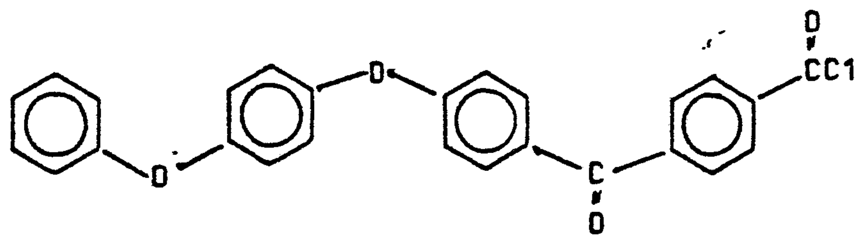

It is to be understood that combinations of monomers can be employed. For example, one or more diacid dihalides can be used with one or more polynuclear aromatic comonomers as long as the correct stoichiometry is maintained. Further, one or more acid halides can be included. In addition monomers which contain other linkages such as those specified above, can be employed as long a one or more of the comonomers used contains at least one ether oxygen linkage. Such comonomers include for example:

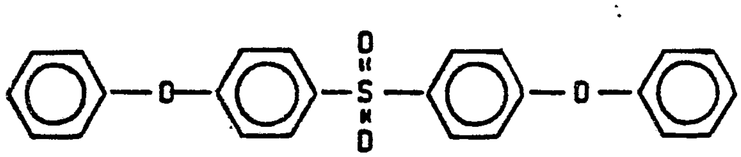

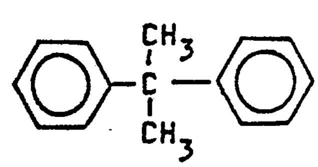

which can be used as the sole comonomer with an ether containing diacid dihalide or with phosgene or any diacid dihalide when used in addition to a polynuclear aromatic comonomer as defined in I(ii)(a), I(ii)(b), I(ii)(c) or I(ii)(d). Similarly

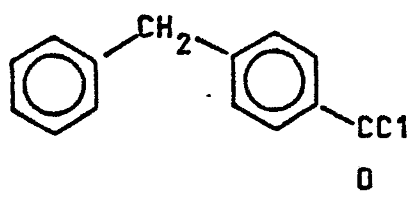

can be used as a comonomer together with an ether-containing polynuclear aromatic acid halide or as an additional comonomer together with a monomer system as defined in I.

The monomer system can also contain up to about 30 mole % of a comonomer such as a sulfonyl chloride which polymerizes under Friedel-Crafts conditions to provide ketone/sulfone copolymers.

Further details of this process for producing poly(aryl ether ketones) can be found in commonly assigned co-pending U.S. application Serial No. 594,503, filed 31 March 1984, the disclosure of which is incorporated herein by reference.

A second component polyetherimide of the invention comprises those described in U.S. Patent 4,293,670 incorporated herein by reference.

A preferred polyetherimide has the repeat unit.

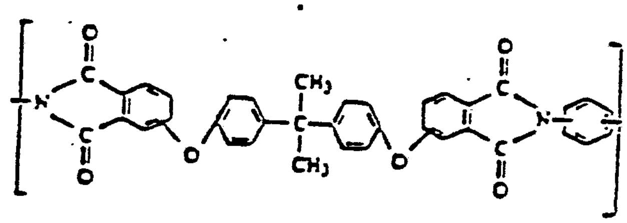

The polymers used in the invention can be used in any of the various commercial or non-commercial grades which may vary in average molecular weights, molecular weight distributions and contain minor amounts of comonomer residues and the like.

Blends of molecularly compatible polymers are characterized in that they comprise a single amorphous phase although any crystalline portions may exist as a separate phase. One aspect of this degree of compatibility is that the amorphous phase exhibits a single glass transition temperature as defined above.

The molecularly compatible polymers suitable for use in preparing blends in accordance with this invention comprise from about 40 weight percent of the poly(aryl ether ketone) and preferably from about 50 weight percent.

The compositions of this invention are prepared by any conventional mixing methods. For example, the components can be mixed on a two-roll mill, in an internal mixer such as a Brabender mixer or Banbauy mixer or in a single or twin screw extruder. They may also be prepared by casting or precipitation from solution or the like.The blended article can be shaped, for example, by extrusion, casting, melt spinning, injection molding, hydraulic pressing, blow molding or the like. Further, the blends can be annealed by any method known in the art.

Additives may be included in the present blends. These additives include plasticizers; pigments; flame retardant additives, particularly, decabromodiphenyl ether and triarylphosphates, such as triphenylphosphate; reinforcing agents, such as glass fibers; thermal stabilizers; ultraviolet light stabilizers, processing aids, impact modifiers , and the like. The blends may also contain other polymers such as PTFE and the like.

The blends of the invention have various uses. For example, they may have high temperature applications such as, automobile parts, engine parts and connectors, electrical components. Further they may be used as boxes, boards, connectors, covers (such as for wires), bearings, bearing surfaces or the like.

Figure 1 is a graph which shows Normalized Crystallization area neses concentration of Polyetherketone (PEK) and Polyetherimide (PEI).

Figure 2 is a graph which shows stress crack after solvent exposure.

Figure 3 is a graph which shows secant modulus @ 230°C.

Figure 4 is a graph of Tg.

Figure 5 is a graph of room temperature elongation.

The following examples serve to further describe and illustrate the practice of the invention. One skilled in the art would readily be able to make substitutions of co-polymers or make adjustments in temperature, mixing conditions, etc. The examples are not intended in any way to limit the scope of the invention.

Example 1

Blends were prepared of a polyetherimide, Ultem 1000 produced commercially by General Electric of the repeat unit:

and a polyetherketone, Victrex PEEK (Poly(p-carbonyl-phenylene-p-oxy-phenylene-p-oxy-phenylene) commercially produced by ICI America, Inc. A dry blend of the pelletized materials was compounded using a twin screw extruder using a temperature profile from about 350°C to 380°C. The material was cooled in a water trough and pelletized. Pellets obtained in this fashion were injection molded into tensile and flexural testing specimens at temperatures from 350°C to 390°C using mold temperatures of 120-127°C at injection pressures of 1000 to 1100 psi. Similarly pellets of the individual components may similarly be processed and molded.

Alternately test specimens were obtained by an extrusion of compounded pellets or individual component pellets in a single screw extruder into a thin tape form using temperatures between 340°C and 370°C. A die punch in a hydraulic press was used to produce test speciments. Mechanical properties obtained for test specimens are shown in Table I.

From the table, it is evident that the physical properties and stress carck resistors decrease dramatically at a PEEK concentration of about 40-50%.

TABLE I

| Concentration of Polyetherketone | Concentration of Polyetherimide | 1% Secant Modulus @ 230°C (PSI) | 1* Tensile Strength @ 230°C (PSI) | 2* Ultimate Elongation At Ambient Tempt. (%) | 2* Stress to Crack in Acetone (PSI) |
|---|---|---|---|---|---|
| 100 | 0 | 27533 | 8224 | 110 | 11051 |
| 95.5 | 4.5 | - | - | - | 12252 |
| 90 | 10 | 21600 | 6316 | 122 | - |
| 80 | 20 | 17775 | 7077 | 120 | 11921 |
| 70 | 30 | 13050 | 5663 | 107 | - |
| 60 | 40 | 9533 | 9151 | 130 | 11997 |
| 50 | 50 | 7233 | 2403 | 155 | 11563 |
| 40 | 60 | 4667 | 747 | 154 | 4617 |
| 30 | 70 | 2833 | 17 | 16 | - |
| 20 | 80 | 767 | 38 | 6 | 3477 |
| 10 | 90 | 600 | 476 | 18 | - |
| 0 | 100 | 97 | 380 | 12 | 3371 |

1* - Bars tested

2* - Tape tested

Example 2

Thermal properties were obtained for test specimens produced as in Example 1. Glass transition temperatures were determined both by Differential Scanning Calorimetry (DSC) and using a Rheometrics mechanical spectrometer (RMS).

Table II shows results of these determinations:

TABLE II

| Concentration of Polyetherimide | Concentration of Polyetherimide | DSC Tg | RMS Tg | Heat Deflection Temperature | Normalized Crystalline Area |
|---|---|---|---|---|---|
| 100 | 0 | 155 | 160 | 172 | 8.92 |
| 95.5 | 4.5 | 165 | 175 | - | 11.2 |
| 90 | 10 | 167 | 168 | 181 | 11.2 |
| 80 | 20 | 172 | 180 | 192 | 10.2 |
| 70 | 30 | 179 | - | 197 | 8.4 |
| 60 | 40 | 188 | 209 | - | 9.6 |
| 50 | 50 | 203 | - | 205 | 9.1 |
| 40 | 60 | 206 | 214 | 208 | 10.8 |
| 30 | 70 | 201 | - | 209 | 1.3 |
| 20 | 80 | 208 | 208 | 211 | |
| 10 | 90 | 218 | - | 213 | |
| 0 | 100 | 222 | 221 | 218 | |

It is evident from these results that a material composed of polymers compatible on a molecular scale is obtained as shown by a single Tg for the blends which is intermediate between that of the homopolymers at all concentrations. In addition, a melt processable, non-reinforced semicrystalline polymer composition with heat deflection temperatures as high as 208°C is obtained.

It appears that the polyetherimide may plasticize the polyetherketone to the extent that under these conditions, higher normalized crystallinities are obtained in the blends than for PEEK and that higher elongations are obtained for some of the blends than for either component alone. (Figure 5).

Example 3

A blend of 50% Ultem polyetherimide and 50% Victrex PEEK polyetherketone was prepared in a Brabender mixing bowl at 400°C and Tg measured using a DSC.

Example 4

A blend of 60% Poly(p-carbonyl-phenylene-p-oxy-phenylene) and 40% Ultem polyetherimide was prepared on a twin screw extruder in a temperature range from 360 to 390°C.

A single glass transition temperature of the blend was determined to be 193°C, intermediate between the value of 166°C determined for the polyetherketone alone and that of Ultem.

Example 5

Mechanical properties and glass transition temperatures were determined for blends of PEEK and Ultem, prior to annealing of extruded tape. Results are shown in Table III below.

TABLE III

| % PEEK | % PEI | Tensile Strength (psi) | Ultimate Elongation (%) | Tg |
|---|---|---|---|---|
| 100 | 0 | 9599 | 127 | 152 |
| 90 | 10 | 9937 | 127 | 160 |
| 80 | 20 | 9273 | 117 | 164 |
| 70 | 30 | 9804 | 130 | 169 |
| 60 | 40 | 10380 | 123 | 178 |
| 50 | 50 | 8966 | 100 | 189 |
| 40 | 60 | 9364 | 87 | 195 |
| 30 | 70 | 10790 | 40 | 204 |
| 20 | 80 | 11100 | 23 | 211 |
| 10 | 90 | 11060 | 14 | 220 |
| 0 | 100 | 10483 | 80 | 222 |

Example 6

Blends were made according to Example 1 execpt the poly(aryl ether ketone) is Poly(p-carbonyl-phenylene-p-carbonyl-phenylene-p-oxy phenylene-p-oxy-phenylene).

What is claimed is

1. A composition comprising a) a first component comprising a poly(aryl ether ketone) and b) a second component comprising a polyetherimide wherein the poly(aryl ether ketone) comprises at least about 40 weight percent of the weight of a) plus b).

2. A composition according to claim 1 wherein the poly (aryl ether ketone) has the repeat unit of the formula:

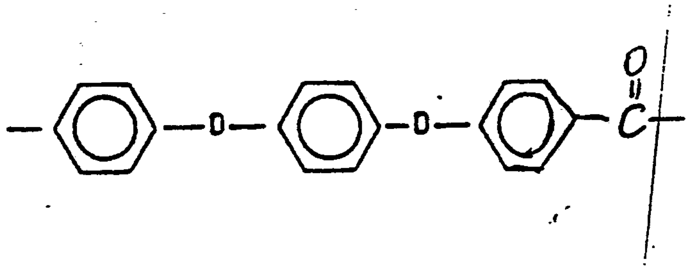

3. A composition according to claim 1 wherein the poly (aryl ether ketone) has the repeat unit of the formula:

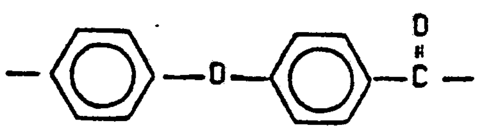

4. A composition according to claim 1 wherein the poly(aryl ether ketone) has the repeat unit of the formula:

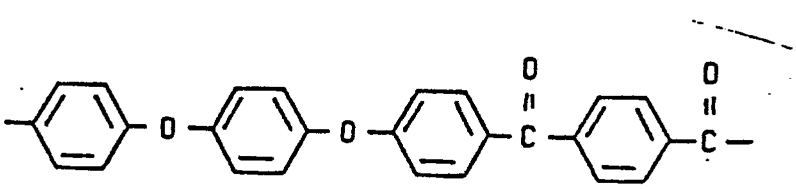

5. A composition according to claim 1 wherein the polyetherimide is of the formula:

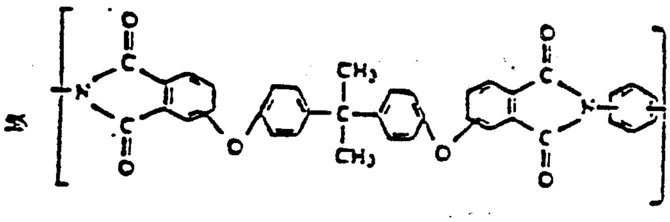

6. A composition according to claim 1 which further comprises plasticizers.

7. A composition according to claim 1 which further comprises pigments.

8. A composition according to claim 1 which further comprises flame retardants.

9. A composition according to claim 1 which further comprises reinforcing agents.

10. A composition according to claim 1 which further comprises thermal stabilizers.

11. A composition according to claim 1 which further comprises ultraviolet light stabilizers.

12. A composition according to claim 1 which further comprises processing aids.

13. A composition according to claim 1 which further comprises impact modifiers.

14. A composition according to claim 1 which further comprises other polymers.

15. A composition according to claim 1 which has been annealed.

16. A composition according to claim 1 wherein the poly(aryl ether ketone) comprises at least about 50 weight percent of the weight of a) plus b).

Fig.1.

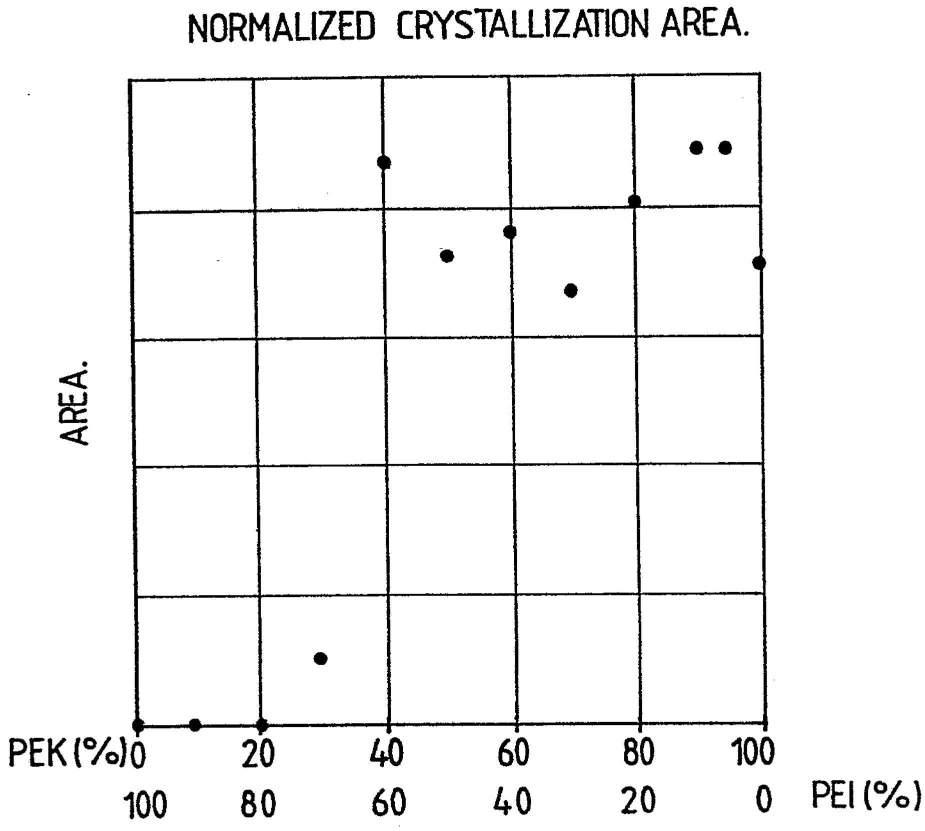
NORMALIZED CRYSTALLIZATION AREA.
AREA.
PEK (%) 0 20 40 60 80 100
100 80 60 40 20 0 PEI (%)

Fig.2.

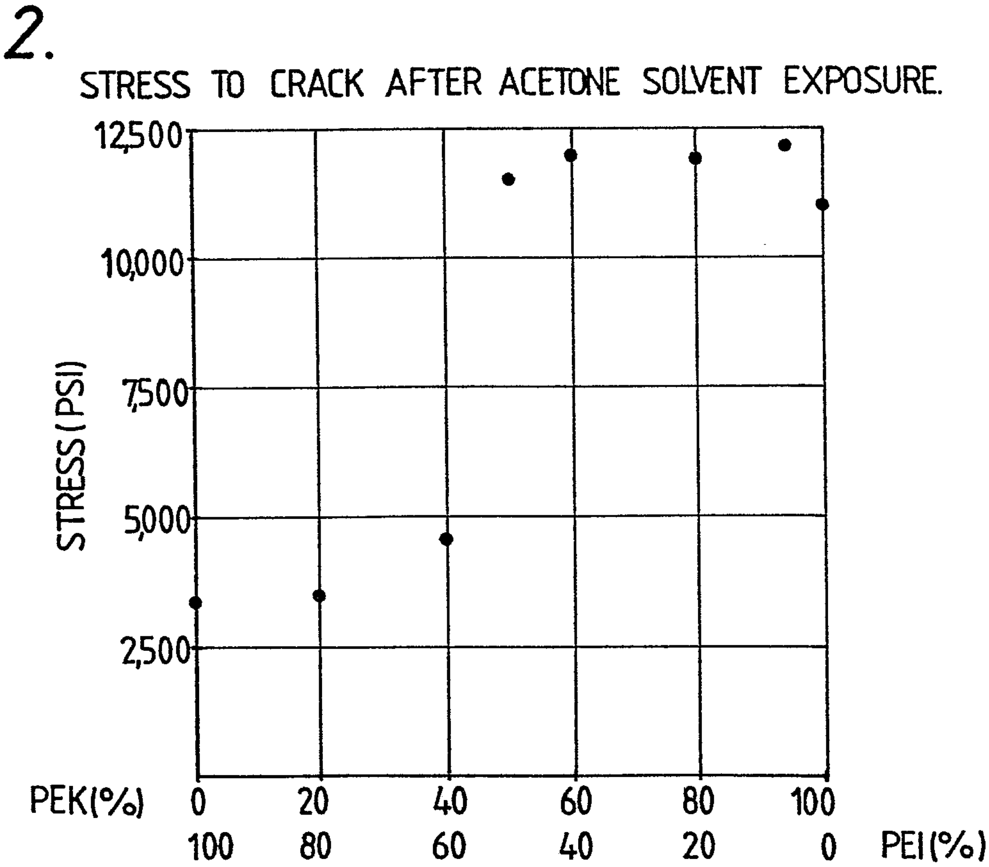
STRESS TO CRACK AFTER ACETONE SOLVENT EXPOSURE.
STRESS (PSI)
12,500
10,000
7,500
5,000
2,500
PEK(%) 0 20 40 60 80 100
100 80 60 40 20 0 PEI(%)

*Fig.3.*

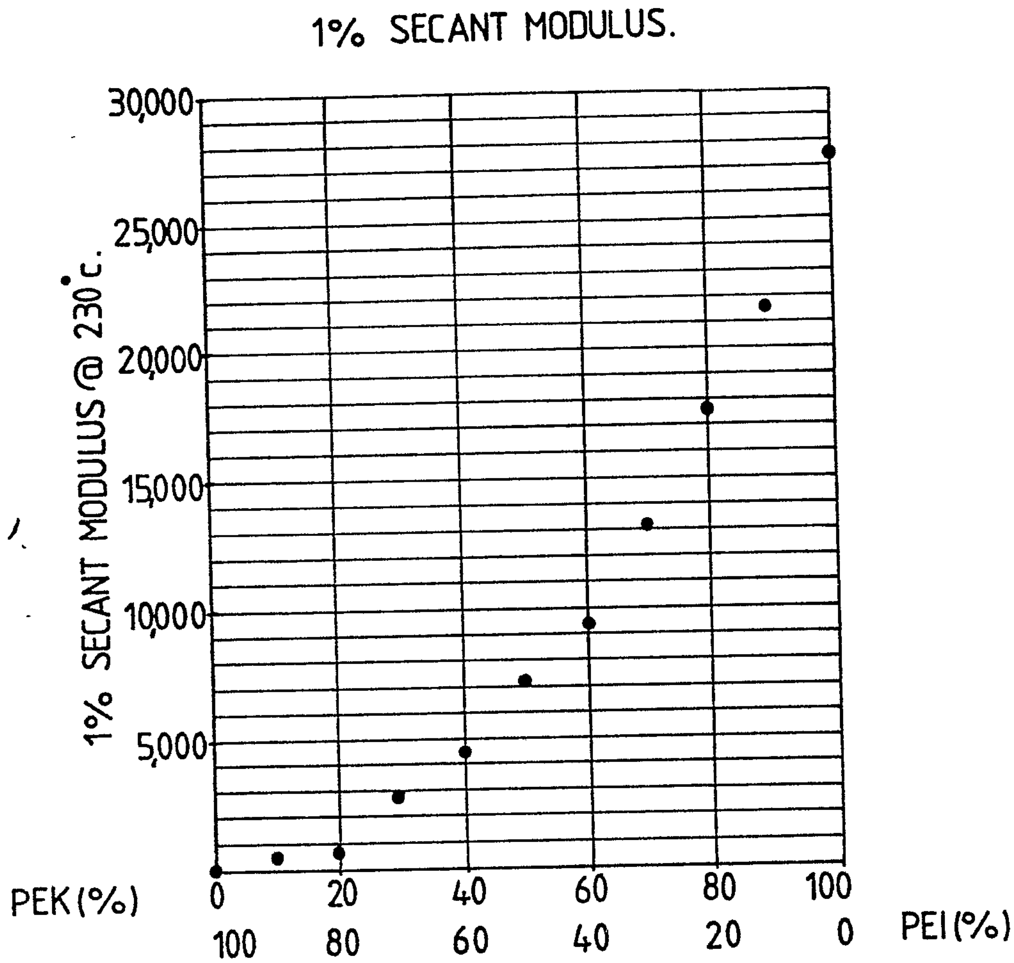
1% SECANT MODULUS.
1% SECANT MODULUS @ 230°C.
30,000
25,000
20,000
15,000
10,000
5,000
PEK(%)
0
20
40
60
80
100
100
80
60
40
20
0
PEI(%)

*Fig.4.*

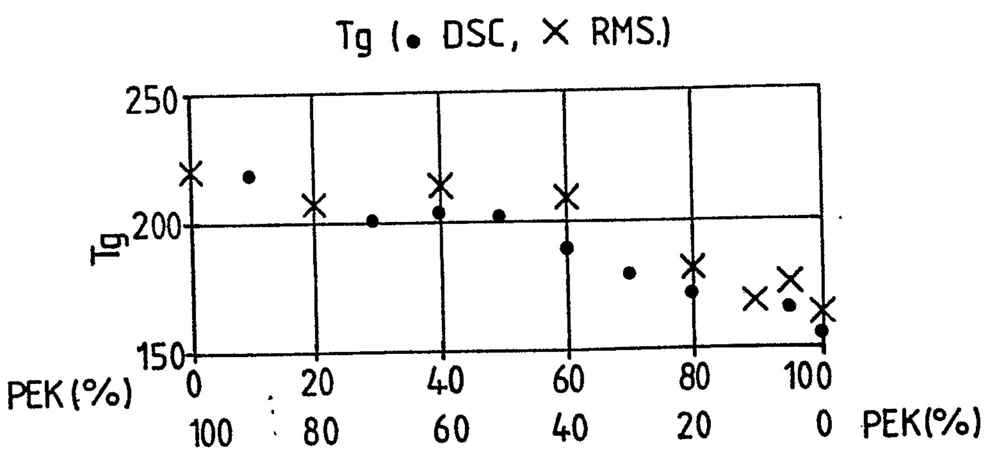
Tg (• DSC, × RMS.)
Tg
250
200
150
PEK(%)
0
20
40
60
80
100
100
80
60
40
20
0
PEK(%)

Fig.5.

ROOM TEMPERATURE ELONGATION.

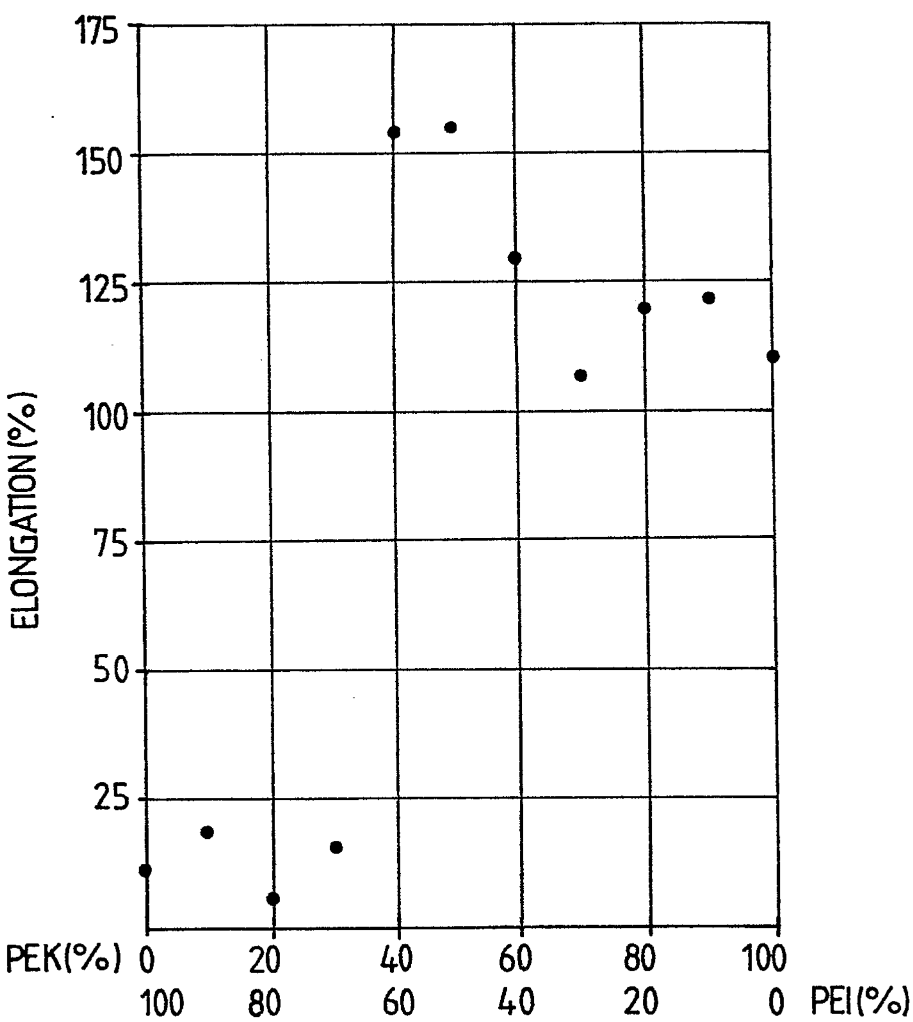

European Patent Office

**EUROPEAN SEARCH REPORT**

**0163464**
Application number

EP 85 30 3498

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | EP-A-0 033 394 (UNION CARBIDE CORP.) * Claims 1,4,8; page 19, lines 26-33 * | 1,3,5-13 | C 08 L 71/00<br>C 08 L 65/00<br>C 08 L 79/08 |
| A | EP-A-0 097 969 (UNION CARBIDE CORP.) * Claim 1; page 5, third formula; page 16, formula * | 1,3,5,14 | |
| A | EP-A-0 062 830 (UNION CARBIDE CORP.) * Claims 1,5-7,9 * | 1-3,14 | |
| P,A | PATENT ABSTRACTS OF JAPAN, vol. 9, no. 41, 21st February 1985, page (C-267) (1764); & JP-A-59-184254 (TORAY K.K.) 19-10-1984 | 1,2 | TECHNICAL FIELDS SEARCHED (Int. Cl.4) |
| A | GB-A-1 471 171 (RAYCHEM CORP.) * Example 6 * | 4 | C 08 L 65/00<br>C 08 L 71/00<br>C 08 L 79/00 |

The present search report has been drawn up for all claims

| Place of search | Date of completion of the search | Examiner |
|---|---|---|
| BERLIN | 26-07-1985 | HASS C V F |

**CATEGORY OF CITED DOCUMENTS**

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82